Europäisches Patentamt

European Patent Office

Office européen des brevets

(19)

(11) **EP 0 715 025 A1**

(12) **DEMANDE DE BREVET EUROPEEN**

(43) Date de publication:
05.06.1996 Bulletin 1996/23

(51) Int. Cl.⁶: **E01C 5/00**, E04F 15/08,
E04F 13/08

(21) Numéro de dépôt: 94402732.5

(22) Date de dépôt: 29.11.1994

(84) Etats contractants désignés:
BE CH DE ES FR GB IT LI LU PT

(71) Demandeurs:
• LEVAVASSEUR, Jean
F-95450 Ableiges (FR)
• MERLIN, Eric
F-92800 Puteaux (FR)

(72) Inventeurs:
• LEVAVASSEUR, Jean
F-95450 Ableiges (FR)
• MERLIN, Eric
F-92800 Puteaux (FR)

(74) Mandataire: Desaix, Anne et al
Ernest Gutmann - Yves Plasseraud S.A.
3, rue Chauveau-Lagarde
F-75008 Paris (FR)

(54) **Système d'assemblage de volumes ou de surfaces et méthodes de mise en oeuvre**

(57)    L'invention concerne un système d'assemblage de volumes ou de surfaces, caractérisé en ce qu'il comprend un module (10) comprenant:

-    un élément de support central (20) et
-    quatre ergots de rétention (30, 40, 50, 60) liés audit élément central (20) par une de ses extrémités et comprenant un plan externe (34) tangentiel au plan vertical (26) de l'élément de support central (20) suivant une parallèle à l'axe vertical (27) de ce support central (20) et une face interne comprenant un nombre impair de plans inclinés (46), chacun desdits ergots (30, 40, 50, 60) représentant un volume égal ou légèrement inférieur, identique et positionné de façon inversement symétrique à la moitié du volume d'une des deux cavités centrales (70, 80) formée par deux des quatre ergots afin de permettre l'imbrication de deux ergots appartenant à deux desdits modules dans une des cavités centrales d'un troisième module et ainsi de suite de façon à constituer lesdits volumes ou surfaces, toute force exercée sur lesdits volumes ou surfaces de façon substantiellement parallèle à l'axe vertical de l'élément de support central desdits modules assemblés provoque, grâce à l'interaction desdits plans inclinés, un effet résultant sur les plans externes entraînant l'autoverrouillage de l'ensemble d'un minimum de trois desdits modules.

FIG. 2

## Description

L'invention concerne un système d'assemblage de volumes ou de surfaces comprenant des modules d'assemblage ou pavés autobloquants. Le système de l'invention peut être utilisé à plusieurs titres, particulièrement dans l'élaboration de revêtements de sols, de murs et de jeux de construction. Plus particulièrement, chacun des modules du système de l'invention est constitué d'un élément de support central auquel sont reliés quatre ergots identiques formant ainsi deux cavités centrales dont la géométrie est rigoureusement identique. Ce type de structure permet d'imbriquer les modules de l'invention les uns dans les autres afin de former une surface unitaire. Les modules ainsi imbriqués s'autoverrouillent lorsqu'une force de traction substantiellement parallèle à l'axe vertical de l'élément de support central est exercée sur le système. La force de traction ainsi exercée entraîne l'autoverrouillage de l'ensemble.

On a déjà décrit des pavés de géométrie particulière permettant leur assemblage afin de former des surfaces lisses. Cependant, le type de pavés décrit jusqu'à présent possède l'inconvénient de ne pouvoir interagir avec les autres pavés par le jeu de forces de traction et de poussée lorsque les éléments sont imbriqués les uns dans les autres. On peut donc enlever certains pavés avec facilité, ce qui a pour résultat d'affaiblir l'ensemble de la surface lisse ainsi construite.

La présente invention concerne un système d'assemblage de volumes ou de surfaces comprenant des modules de géométrie particulière. Cette géométrie confère aux modules de l'invention des propriétés d'autoblocage impossibles à obtenir avec les pavés décrits précédemment.

L'invention concerne un système d'assemblage de volumes ou de surfaces, caractérisé en ce qu'il comprend un module comprenant:

- un élément de support central représenté par un volume dont la section est une forme géométrique divisible en quatre parties présentant une symétrie médiane deux à deux; et
- quatre ergots de rétention égaux et symétriques deux à deux.

Chacun des ergots de rétention est lié à l'élément de support central par une de ses extrémités et comprend un plan externe tangentiel au plan vertical des éléments de support central suivant une parallèle à l'axe vertical du support central et une face interne comprenant un nombre impair de plans inclinés. Chacun des ergots représente un volume égal ou légèrement inférieur, identique et positionné de façon inversement symétrique à la moitié du volume d'une des deux cavités centrales formées par deux des quatre ergots. Ceci permet l'imbrication de deux ergots appartenant à deux modules dans une des cavités centrales d'un troisième module et ainsi de suite de façon à constituer des volumes ou surfaces. Toute force exercée sur ces volumes ou surfaces de façon substantiellement parallèle à l'axe vertical de l'élément de support central des modules assemblés provoque, grâce à l'interaction des plans inclinés, un effet résultant sur les plans externes entraînant l'autoverrouillage de l'ensemble d'un minimum de trois modules.

### Description des figures

La figure 1 représente une vue en plan d'une réalisation préférentielle des modules d'assemblage de l'invention.

La figure 2 représente une vue en plan de plusieurs modules d'assemblage de la figure 1 imbriqués pour former une surface lisse.

La figure 3 représente une vue en plan d'un assemblage d'une autre réalisation préférentielle de modules de l'invention.

L'invention concerne donc un système d'assemblage de volumes ou de surfaces caractérisé en ce qu'il comprend plusieurs modules identiques. Chacun de ces modules comporte un élément de support central de géométrie quelconque et de symétrie rigoureuse (carré, rectangle, cercle, ellipse, bobine, etc.) auquel sont ajoutées quatre parties excroissantes (ergots) égales et symétriques dont le plan externe est tangentiel au plan vertical de l'élément de support central. Chacun des ergots comprend également une face interne opposée au plan externe et comprenant un nombre impair de plans inclinés.

La forme des modules de l'invention est caractérisée en ce que lorsque plusieurs de ces modules sont imbriqués de façon à former une surface plane ou même accidentée et lorsqu'une force de traction parallèle au plan de la surface et substantiellement parallèle à l'axe vertical de l'élément de support central est exercée sur un ou plusieurs de ces modules, une force réactive perpendiculaire à la force initiale provoque l'autoverrouillage de l'ensemble des modules, rendant le système d'assemblage autobloquant.

De façon originale et supplémentaire, l'invention est caractérisée en ce que la force de traction peut être exercée dans deux directions opposées et provoquer un ensemble de forces résultantes entraînant un phénomène d'autoverrouillage encore plus efficace, lorsque l'élément de support central comporte un côté incliné ou mi-courbé.

Suivant une autre caractéristique de l'invention, l'élément de support central peut avoir une grande variété de dimensions et chacun des modules composant le système d'assemblage peut également avoir des dimensions variables déterminées en fonction de l'utilisation prévue (sol, mur, blocage de plans inclinés, jeux de construction, etc.) ou bien des caractéristiques liées aux techniques de fabrication. Par exemple, lorsqu'on fabrique un module en utilisant un plastique moulé, on doit prendre en compte les impératifs de dimension liés à la taille des appareils de fabrication utilisés, plus particulièrement la taille des moules à injection disponibles à l'homme du métier. Plus particulièrement, l'élément de support central est de forme généralement rectangulaire de longueur variant entre 1 cm et 1 m, de largeur variant entre 1 cm et 1 m, d'épaisseur variant entre 1 mm et 1 m pour un volume total variant entre 1 cm$^3$ et 0,1 m$^3$ lorsqu'il s'agit d'utiliser les modules de l'invention pour constituer des sols, des murs ou des plans inclinés. Lorsqu'il est envisagé d'utiliser les éléments de l'invention pour la fabrication de jeux de construction, les dimensions de l'élément de support central sont évidemment beaucoup plus réduites et varient de façon générale, pour le volume total, entre 1 cm$^3$ et 10 cm$^3$.

En ce qui concerne les ergots de rétention, dont la structure sera décrite de façon plus détaillée ci-dessous, le nombre de plans inclinés compris sur la face interne varie entre 1 et 99. Le nombre de plans inclinés peut être considérable dans les situations où la structure de la face interne des ergots de rétention est semblable à une structure en dents de scie. De façon préférentielle, le nombre de plans inclinés varie entre 1 et 7. Quant au volume total de chacun des ergots de rétention, il peut varier entre 160 cm$^3$ et 6000 cm$^3$ pour des applications concernant les sols, les murs et les blocages de plans inclinés. En ce qui concerne la fabrication de jeux de construction, le volume total des ergots de rétention varie de façon générale entre 160 cm$^3$ et 6000 mm$^3$.

L'inventeur croit qu'il existe un lien physique ou mécanique entre les différentes parties du module de l'invention qui est relié à un phénomène de répartition des forces sur l'axe longitudinal des ergots. En somme, les proportions des dimensions de l'élément de support central et des ergots, tant au niveau de leur longueur, de leur largeur que de leur épaisseur, influe sur l'intensité du phénomène d'autoblocage du système. Ainsi, le phénomène d'autoblocage aurait tendance à être focalisé pour un élément de support central présentant un axe vertical important et des ergots de longueur faible puisque les forces réactives n'agissent alors qu'en certains points focalisés du système.

Le phénomène contraire, soit un phénomène d'autoblocage observé sur une partie importante de la surface du système, semble se produire lorsque l'élément de support central présente un axe vertical de dimension réduite et que l'axe longitudinal des ergots est plus considérable. Une distribution plus uniforme des forces réactives résultant de l'imposition d'une force de traction semble alors être observée.

Suivant une autre caractéristique de l'invention, les modules de l'invention peuvent inclure des orifices de diamètre tel que l'on puisse obtenir un ensemble autobloquant dans lequel on peut avantageusement disposer des produits tels que soit générée une culture de gazon, de fleurs, de légumes, etc. La surface de ces orifices peut varier de façon substantielle mais se situe généralement entre 50 et 95%, plus particulièrement entre 80 et 90% de la surface moyenne des ergots de l'élément de support central, représentant par exemple une structure de type nid d'abeille. Un tel système présente des avantages considérables lorsqu'il est utilisé par exemple sur des grandes surfaces de culture. Ceci peut entre autres permettre d'éviter que des cultures soient emportés par d'importantes pluies ou inondations. Ce système permet par ailleurs de constituer des surfaces engazonnées piétinables.

Le nombre de matières avec lesquelles il est possible de fabriquer les modules de l'invention est considérable. Une des applications de cette invention étant liée au recyclage des matières issues de la collecte des déchets, on peut citer :

- les plastiques mélangés,
- les papiers/cartons,
- le verre,
- les fibres de toutes natures,
- les matériaux composites.

Il est souhaitable que les ergots présentent une certaine homogénéité par rapport à l'élément de support central et une flexibilité suffisante pour favoriser un déplacement du plan externe des ergots lorsqu'ils sont soumis à une force de traction qui sera décrite de façon plus détaillée ci-après, particulièrement un déplacement compris entre 1/1000 et 1 degré par rapport à l'axe vertical de l'élément de support central.

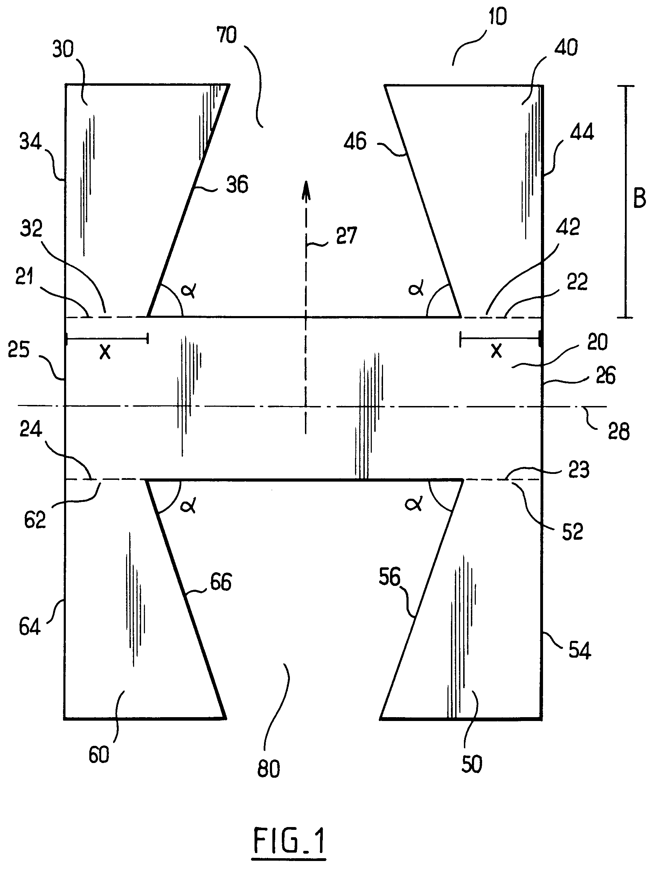

Faisant maintenant référence aux figures, et plus particulièrement à la figure 1, un module d'une réalisation préférentielle d'un des systèmes d'assemblage de volumes ou de surfaces de l'invention est représenté de façon générale par la référence numérique 10. Le module 10 comprend un élément de support central 20 délimité par les pointillés 21, 22, 23 et 24 et quatre ergots de rétention, 30, 40, 50 et 60 reliés au support central 20.

Le support central 20 est de forme géométrique généralement rectangulaire, bien que, tel que mentionné précédemment, d'autres formes soient possibles dans la mesure où ces formes correspondent à un support central ayant une symétrie rigoureuse. Lorsque le module de l'invention est utilisé dans un système d'assemblage de volumes ou de surfaces servant à l'élaboration d'ouvrages de construction tels que murs et sols, la longueur du support central 20 varie normalement entre 1 cm et 1 m, sa largeur entre 1 cm et 1 m et son épaisseur entre 1 mm et 1 m.

Les ergots de rétention 30, 40, 50 et 60 sont disposés en paires 30 et 40 et 50 et 60 de chaque côté du support central 20 et sont reliés à ce dernier par leur extrémité 32, 42, 52 et 62. Chacun des ergots de rétention 30, 40, 50 et 60 comprend un plan externe 34, 44, 54 et 64 qui est disposé de façon à être tangentiel aux plans verticaux 25 et 26 de l'élément de support central 20 suivant une parallèle à l'axe vertical du support central 20 indiqué par la flèche pointillée 27. Il est à noter que les termes « vertical » et « longitudinal » lorsqu'il est question des axes du support central 20 ne sont utilisés que pour indiquer la direction de ces axes. En effet, il est possible que, contrairement à ce qui est démontré à la figure 1,la forme rectangulaire de l'élément central 20 soit disposée dans la direction opposée à la direction représentée, auquel cas l'axe représenté par la flèche pointillée 27 serait toujours considéré comme étant l'axe vertical. L'axe vertical traverse donc les cavités centrales 70 et 80, auxquelles il sera fait référence plus loin.

Chacun des ergots de rétention 30, 40, 50 et 60 possèdent une face interne comprenant un nombre de plans inclinés. Dans la réalisation préférentielle représentée à la figure 1, la face interne ne comprend qu'un seul plan incliné, identifié par les références numériques 36, 46, 56 et 66. L'angle d'inclinaison $\alpha$ des plans inclinés 36, 46, 56 et 66, qui est mesuré en fonction de l'axe longitudinal du support central 20 et représenté par la ligne pointillée 28, est identique pour chacun de ces plans inclinés et varie entre 10 et 89°, particulièrement entre 60 et 85°C. L'angle d'inclinaison $\alpha$ est important parce qu'il favorise l'action autoverrouillante du module 10. Ainsi, plus l'angle d'inclinaison $\alpha$ se rapproche de la limite supérieure énoncée ci-dessus, plus les forces de traction exercées sur le système génèrent des phénomènes de friction des ergots qui permettent l'autoblocage efficace de l'ensemble sans cassure des modules au niveau de la jonction des ergots et de l'élément de support central. Ce phénomène de cassure risque de se produire davantage lorsque l'angle d'inclinaison $\alpha$ est faible. Un angle d'inclinaison $\alpha$ entre 60 et 85° est donc préférable pour atteindre un équilibre souhaitable du système entre la friction et l'autoblocage, tout en minimisant les risques de cassure.

Suivant une autre caractéristique de l'invention, la longueur B des plans externes 34, 44, 54 et 64 des ergots 30, 40, 50 et 60, la longueur x des extrémités liées 32, 42, 52 et 62 des ergots et l'angle $\alpha$ sont reliés par l'équation suivante :

$$\tg \alpha = \frac{\text{longueur du plan externe (B)}}{\text{longueur des extrémités liées des ergots (x)}}$$

Connaissant donc la valeur de deux des éléments de l'équation enseignée précédemment, le troisième élément peut être facilement défini. La longueur du plan externe tangentiel (B) varie entre 10 mm et 100 mm, particulièrement entre 10 mm et 200 mm alors que la longueur de l'extrémité liée des ergots (x) varie entre 1 mm et 100 mm, particulièrement entre 10 mm et 50 mm.

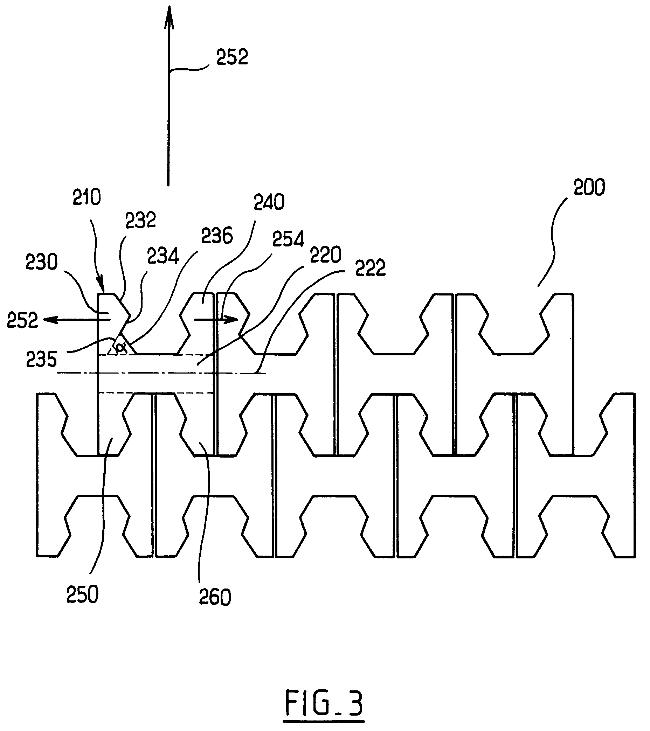

Tel que mentionné précédemment, le module 10 de la figure ne comprend qu'un seul plan incliné 36, 46, 56 et 66 sur chacun des ergots 30, 40, 50 et 60. L'angle d'inclinaison $\alpha$ est donc mesuré à partir de ce plan incliné. Cependant, dans les réalisations pour lesquelles chacun des ergots comprendrait plus d'un plan incliné (ceci sera démontré de façon plus détaillée à la figure 3), l'angle d'inclinaison est mesuré à partir du plan incliné médian.

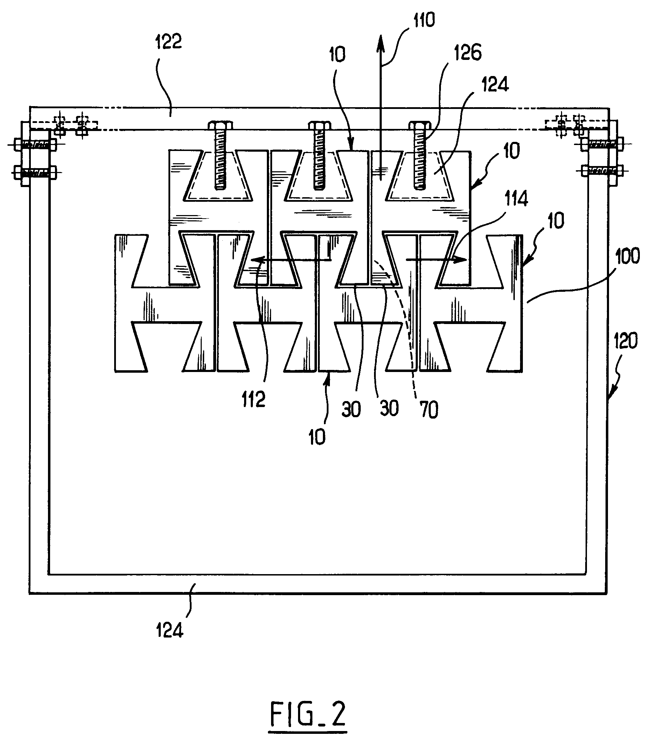

Se référant de nouveau à la figure 1, deux cavités centrales 70 et 80 sont respectivement délimitées par le support central 20 et les paires d'ergots 30 et 40 et 50 et 60. La surface de chacune de ces cavités centrales 70 et 80 correspond à environ deux fois la surface d'un des ergots de rétention 30, 40, 50 et 60, de façon à pouvoir imbriquer les modules d'assemblage 10 les uns dans les autres, tel que représenté à la figure 2. Il est important de noter que chacun des ergots 30, 40, 50 et 60 représente un volume égal ou légèrement inférieur, identique et positionné de façon inversement symétrique à la moitié du volume d'une des deux cavités centrales 70 et 80 afin de permettre l'imbrication de deux ergots appartenant à deux modules dans une des cavités centrales du troisième module.

Se référant maintenant à la figure 2, une surface 100 comprenant plusieurs modules d'assemblage 10 est représentée. Tel que mentionné précédemment, deux des ergots 30 sont imbriqués dans une cavité centrale 70 afin de former un ensemble final unitaire.

Lorsqu'une force de traction substantiellement parallèle à l'axe vertical de l'élément de support central 20 d'un des modules 10, et représentée par la flèche 110, est exercée sur l'ensemble du système 100, cette force de traction 110 provoque, grâce à l'interaction des plans inclinés 36, 46, 56 et 66 (voir figure 1) un effet résultant sur les plans externes 34, 44, 54 et 64 (voir figure 1), indiqué par les flèches 112 et 114, entraînant l'autoverrouillage de l'ensemble du système. Les plans externes de chacun des ergots 30, 40, 50 et 60 (voir figure 1) subissent une action de compression qui interdit le déplacement de l'ensemble du système.

La force de traction 110 peut être exercée sur le système 100 de plusieurs façons Selon une caractéristique additionnelle de l'invention, le système comprend également des moyens de traction permettant d'exercer une force de traction sur un ou plusieurs desdits modules. Particulièrement les moyens de traction comprennent un support qui peut se présenter sous forme d'un cadre rigide 120 muni de moyens de préhension déplaçables reliés au support et de géométrie suffisamment complémentaire à la cavité centrale du module pour pouvoir exercer une force de traction sur le système. Ces moyens de préhension qui peuvent être disposés sur deux côtés 122 et 124 du cadre 120 (seuls les moyens de préhension du côté 122 sont illustrés) peuvent prendre la forme de blocs 124 (illustrés en pointillés) reliés au cadre 120 par des moyens d'attache 126 (des vis par exemple). Dans la réalisation représentée à la figure 2, les blocs 124 sont de volume égal ou légèrement inférieur aux cavités 70. On peut donc ajuster la force de traction exercée sur le système 100 par l'entremise des vis 126 qui permettent de déplacer les blocs 124 vers le haut ou vers le bas.

Suivant une autre caractéristique imprévue de l'invention appliquée à sa forme verticale (mur), il semble qu'un impact violent sur un des modules provoque un ensemble de forces conséquentes qui varie selon la force de tension verticale permanente appliquée au système. Ces forces conséquentes tendent à provoquer l'autoblocage des modules situés en périphérie du point d'impact, ce qui rend donc le mur constitué de modules adaptable à la puissance de l'impact. Cette caractéristique de l'invention est particulièrement souhaitable lors de la fabrication de murs de sécurité sur les autoroutes ou les circuits automobiles. Par exemple, on place deux ou trois murs de ce type l'un derrière l'autre, comprenant chacun le système d'assemblage de l'invention, sur lesquels des forces de traction variables sont exercées. Ainsi, on exerce une force de traction faible sur le premier mur de façon à freiner légèrement la trajectoire de la voiture et on augmente la tension exercée sur le système sur les murs placés derrière le premier mur de freinage.

Se référant maintenant à la figure 3, une autre réalisation préférentielle du système de l'invention, représentée de façon générale par la référence numérique 200 est illustrée. Le système 200 comprend un ensemble de modules 210 sur lesquels les ergots de rétention 230, 240, 250 et 260 ont une face interne comprenant trois plans inclinés 232, 234 et 236. La longueur respective des plans inclinés est variable. Cependant, cette réalisation du module de l'invention est intéressante parce que le plan incliné 236 permet d'éviter l'amorce de rupture des ergots lorsque ces derniers sont soumis à une force de traction. Tel que mentionné précédemment, l'angle d'inclinaison a est mesuré par rapport au plan incliné médian. Pour le module 210, cet angle est donc mesuré à partir du plan incliné 234 et de l'axe longitudinal 222 de l'élément de support central 220.

Lorsqu'une force de traction est exercée dans le sens de la flèche 250, les plans inclinés 234 et 236 interagissent pour exercer une force sur les plans externes tel que démontré par les flèches 252 et254.

**Revendications**

1. Un système d'assemblage de volumes ou de surfaces, caractérisé en ce qu'il comprend un module (10) comprenant :

   - un élément de support central (20) représenté par un volume dont la section est une forme géométrique divisible en quatre parties présentant une symétrie médiane deux à deux; et
   - quatre ergots de rétention (30, 40, 50, 60) égaux et symétriques deux à deux, chacun desdits ergots de rétention étant lié audit élément central (20) par une de ses extrémités et comprenant un plan externe (34) tangentiel au plan vertical (26) de l'élément de support central (20) suivant une parallèle à l'axe vertical (27) de ce support central (20) et une face interne comprenant un nombre impair de plans inclinés (46), chacun desdits ergots (30, 40, 50, 60) représentant un volume égal ou légèrement inférieur, identique et positionné de façon inversement symétrique à la moitié du volume d'une des deux cavités centrales (70, 80) formée par deux des quatre ergots afin de permettre l'imbrication de deux ergots appartenant à deux desdits modules dans une des cavités centrales d'un troisième module et ainsi de suite de façon à constituer lesdits volumes ou surfaces, toute force exercée sur lesdits volumes ou surfaces de façon substantiellement parallèle à l'axe vertical de l'élément de support central desdits modules assemblés provoque, grâce à l'interaction desdits plans inclinés, un effet résultant sur les plans externes entraînant l'autoverrouillage de l'ensemble d'un minimum de trois desdits modules.

2. Système d'assemblage selon la revendication 1, caractérisé en ce que lesdits ergots de rétention (30, 40, 50, 60) comprennent entre 1 et 99, particulièrement entre 1 et 7 plans inclinés sur leur face interne.

3. Système selon la revendication 1 ou 2, caractérisé en ce que la longueur B du plan externe (34) et la longueur x de l'extrémité liée (42) de chacun des ergots de rétention ainsi que l'angle $\alpha$ défini par le plan incliné médian de la face interne de chacun des ergots de rétention (30, 40, 50, 60) et l'axe longitudinal (28) de l'élément de support central(20) sont reliés par l'équation suivante :

$$\text{tg } \alpha = \frac{\text{longueur du plan externe (B)}}{\text{longueur des extrémités liées des ergots (x)}}$$

4. Système selon la revendication 3, caractérisé en ce que l'angle $\alpha$ varie entre 10 et 89°, particulièrement entre 60 et 85°, B varie entre 10 mm et 400 mm, particulièrement entre 10 mm et 200 mm et x varie entre 1 mm et 100 mm, particulièrement entre 10 mm et 50 mm.

5. Système selon l'une quelconque des revendications 1 à 4, caractérisé en ce que lesdits modules (10), sont fabriqués de façon homogène à partir de matières issues de la collecte des déchets, particulièrement de matières plastiques, de papier ou carton, de verre, de fibres ou de matériaux composites.

6. Système selon l'une quelconque des revendications 1 à 5, caractérisé en ce que les ergots (30, 40, 50, 60) desdits modules (10) présentent une certaine homogénéité par rapport à l'élément de support central (20) et une flexibilité suffisante pour favoriser un déplacement du plan externe des ergots, particulièrement comprise entre 1/1000 et 1 degré par rapport à l'axe vertical de l'élément de support central.

7. Système selon l'une quelconque des revendications 1 à 6, caractérisé en ce qu'il comprend des moyens de traction permettant d'exercer une force longitudinale sur un ou plusieurs desdits modules.

8. Système selon la revendication 7, caractérisé en ce que lesdits moyens de traction comprennent:

- un support rigide (120); et
- des moyens de préhension (124) déplaçables reliés audit support rigide et de géométrie suffisamment complémentaire à la cavité centrale du module pour pouvoir exercer une force de traction sur le système.

## FIG.1

FIG. 2

252

210
232
236
240
254
230
234
220
222
200

252

235

252

250
260

FIG. 3

**Office européen des brevets**

## RAPPORT DE RECHERCHE EUROPEENNE

Numero de la demande

EP 94 40 2732

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>Y<br>A | DE-A-16 58 466 (GLATZ)<br>* le document en entier * | 1,2<br>5,6<br>3,4 | E01C5/00<br>E04F15/08<br>E04F13/08 |
| | --- | | |
| Y<br>A | WO-A-89 07172 (SAN LUIS OIL CORP)<br>* page 3, ligne 22 - page 4, ligne 2; figures * | 5,6<br>1,2 | |
| | --- | | |
| X<br>A | DE-A-15 34 425 (ZANDER)<br>* le document en entier * | 1,2<br>3,4 | |
| | --- | | |
| X | BE-A-543 799 (SCHMIT)<br>* le document en entier * | 1,2 | |
| | --- | | |
| A | US-A-2 454 292 (PICKETT)<br>* figures 1-4 * | 7 | |
| | ----- | | |

**DOMAINES TECHNIQUES RECHERCHES (Int.Cl.6)**

E01C
E04F
E02B

Le présent rapport a été établi pour toutes les revendications

| Lieu de la recherche | Date d'achèvement de la recherche | Examinateur |
|---|---|---|
| LA HAYE | 19 Avril 1995 | Dijkstra, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)